# EUROPEAN PATENT APPLICATION

(11) **EP 3 483 445 A1**
(43) Date of publication of application: **15.05.2019**
(21) Application number: 17824062.8
(22) Date of filing: 27.06.2017
(51) Int. Cl.: F04C 14/06, F04B 49/06, F16H 61/00

(54) **ELECTRIC-POWERED OIL PUMP DEVICE**

(30) Priority: 06.07.2016 JP 2016134215
(71) Applicant: Aisin Seiki Kabushiki Kaisha, Kariya-shi, Aichi 448-8650 (JP)
(72) Inventor: ENDO, Kazutaka, Kariya-shi Aichi 448-8650 (JP)
(74) Representative: Kramer Barske Schmidtchen Patentanwälte PartG mbB
(86) International application number: PCT/JP2017/023480
(87) International publication number: WO 2018/008456

(57) **Abstract**

An electric oil pump device (100, 200) includes an electric oil pump (10) and a microcomputer (30) that acquires a static friction torque (Tf) of a pump (12) and a motor (11) of the electric oil pump (10), and performs control of activating the electric oil pump (10) based on the acquired static friction torque (Tf).

## Description

### Technical Field

The present invention relates to an electric oil pump device, and more particularly, it relates to an electric oil pump device that includes an electric oil pump including a motor without a position detection sensor.

### Background Art

In general, an electric oil pump device that includes an electric oil pump including a motor without a position detection sensor is known. Such an electric oil pump device is disclosed in Japanese Patent Laid-Open No. 2015-230079, for example.

Japanese Patent Laid-Open No. 2015-230079 discloses a hydraulic supply device in which a mechanical oil pump driven by the drive force of an engine and an electric oil pump driven by a motor are connected in parallel in a hydraulic circuit. In the hydraulic supply device disclosed in Japanese Patent Laid-Open No. 2015-230079, the electric oil pump is activated when the engine is stopped (when the mechanical oil pump is stopped) such that even in an idling stop state, oil pressure is supplied to a transmission of a vehicle. A motor drive microcomputer having an inverter circuit built therein is connected to the motor that drives the electric oil pump. Therefore, electric power (direct-current voltage) from an in-vehicle battery (12 V power supply) is supplied to the motor due to switching control by the motor drive microcomputer such that the electric oil pump is driven (rotationally controlled).

In the rotational control of the motor by the motor drive microcomputer, generally, there is a system (drive system with a sensor) that performs rotational control based on a signal (rotational position information) from a Hall element that detects the rotational position of a rotor, and a system (sensorless drive system) that performs rotational control of the motor based on detection of an induced voltage (counter-electromotive voltage) generated in a drive coil at the time of rotation of the motor without providing such a sensor.

### Prior Art

### Patent Document

Patent Document 1: Japanese Patent Laid-Open No. 2015-230079

### Summary of the Invention

### Problems to be Solved by the Invention

In the hydraulic supply device disclosed in Japanese Patent Laid-Open No. 2015-230079, when the motor is activated by the sensorless drive system, for example, an induced voltage (counter-electromotive voltage) is not generated unless the rotor (drive coil) rotates to some extent after a voltage is applied, and the rotational position of the rotor based on this induced voltage cannot be detected. Therefore, in terms of control, it is necessary to apply a voltage set to a constant value under a forced commutation frequency set in advance to a uniform value (constant value) to attempt activation.

However, the static friction torque (the torque at the moment when the electric oil pump starts to rotate) of the motor and a pump varies individually due to individual differences among manufactured electric oil pumps, and thus even when an attempt is made to activate the motor based on the forced commutation frequency set in advance to an uniform value and the voltage, this electric oil pump cannot be normally activated when the static friction torque of the electric oil pump is excessively large with respect to input energy based on these control values. On the other hand, when the static friction torque is excessively small with respect to the input energy based on the control values, the rotational position of the rotor cannot be correctly detected due to sudden activation of the motor and the excessive induced voltage accompanying an increase in the rotation speed. Therefore, when the motor is activated by a general sensorless drive system, there is a problem that the electric oil pump cannot be stably activated due to the individual differences among the electric oil pumps.

The present invention has been proposed in order to solve the aforementioned problems, and an object of the present invention is to provide an electric oil pump device capable of stably activating an electric oil pump using a motor without a position detection sensor regardless of the individual difference of the electric oil pump.

### Means for Solving the Problems

In order to attain the aforementioned object, an electric oil pump device according to an aspect of the present invention includes an electric oil pump including a motor without a position detection sensor and driven by the motor, and a controller that acquires a static friction torque of a pump and the motor of the electric oil pump based on a relationship between at least one of a torque, a motor current value, or a hydraulic pressure of the electric oil pump detected at a time of activating the electric oil pump and at least one of a rotation speed or an oil discharge amount of the electric oil pump, and performs control of activating the electric oil pump based on the acquired static friction torque.

The electric oil pump device according to this aspect of the present invention includes the controller that acquires the static friction torque of the pump and the motor of the electric oil pump based on the relationship between at least one of the torque, the motor current value, or the hydraulic pressure of the electric oil pump detected at the time of activating the electric oil pump and at least one of the rotation speed or the oil discharge amount of the electric oil pump, and performs control of activating the electric oil pump based on the acquired static friction torque. Accordingly, even when the static friction torque of the pump and the motor of the electric oil pump has an individual difference for each electric oil pump, the activation control of the electric oil pump can be performed based on the static friction torque of the pump and the motor acquired at the time of activating the electric oil pump. Consequently, the electric oil pump using the motor without a position detection sensor can be stably activated regardless of the individual difference of the electric oil pump. Not only when the static friction torque of the pump and the motor has an individual difference at the time of manufacture (at the time of factory shipment) but also when the static friction torque of the pump and the motor changes with time after use of the electric oil pump, the electric oil pump can be activated in a state in which a control value at the time of the activation is reset following the change of the static friction torque. Thus, the electric oil pump can be stably activated for a long period of time.

Furthermore, the electric oil pump device according to this aspect includes the controller described above such that the electric oil pump can be stably activated even when the oil viscosity varies according to the oil temperature. Therefore, the range of the oil temperature at which the electric oil pump can be used can be expanded. In addition, the electric oil pump can be stably activated even when the design tolerance at the time of designing each of the pump and the motor is loosened (the design accuracy is reduced), and thus the design accuracy and the manufacturing accuracy of the electric oil pump can be easily managed.

In the aforementioned electric oil pump device according to this aspect, the controller preferably acquires the static friction torque of the pump and the motor of the electric oil pump based on the relationship between at least one of the torque, the motor current value, or the hydraulic pressure of the electric oil pump detected at the time of activating the electric oil pump and at least one of the rotation speed or the oil discharge amount of the electric oil pump, and corrects a starting voltage and a forced commutation frequency of the motor at the time of activating the electric oil pump based on the acquired static friction torque.

According to this structure, based on the static friction torque of the pump and the motor acquired at the time of activating the electric oil pump, the starting voltage to be applied to the motor and the set forced commutation frequency can be corrected at the time of activating the electric oil pump. Therefore, the electric oil pump using the motor without a position detection sensor can be reliably activated by the starting voltage and the forced commutation frequency corrected based on the acquired static friction torque.

In the aforementioned electric oil pump device according to this aspect, the controller preferably acquires the static friction torque of the pump and the motor of the electric oil pump based on a torque of the electric oil pump when the electric oil pump starts to rotate.

According to this structure, the static friction torque of the pump and the motor at the time of activating the electric oil pump can be reliably acquired.

The aforementioned electric oil pump device according to this aspect preferably further includes a table in which the static friction torque of the pump and the motor in the electric oil pump and a starting voltage and a forced commutation frequency of the motor are associated with each other, and the controller preferably activates the electric oil pump based on the table.

According to this structure, the activation control of the electric oil pump can be easily performed with reference to the table in which the acquired static friction torque and the starting voltage and the forced commutation frequency of the motor are associated with each other at the time of activating the electric oil pump.

In the aforementioned electric oil pump device according to this aspect, the controller preferably activates the electric oil pump based on a correlation expression in which a correlation between the static friction torque of the pump and the motor in the electric oil pump and a starting voltage and a forced commutation frequency of the motor is defined.

According to this structure, the activation control of the electric oil pump can be easily performed based on the correlation expression in which the correlation between the acquired static friction torque Tf and the starting voltage and the forced commutation frequency of the motor is defined at the time of activating the electric oil pump.

In the aforementioned electric oil pump device in which the controller corrects the starting voltage and the forced commutation frequency of the motor based on the acquired static friction torque, the controller preferably repeatedly corrects the starting voltage and the forced commutation frequency of the motor at a time of factory shipment of the electric oil pump or at the time of activating the electric oil pump.

According to this structure, when the electric oil pump is activated for the first time after shipment and every time the activation control of the electric oil pump is performed during normal use, the starting voltage and the forced commutation frequency of the motor are corrected, and thus the electric oil pump using the motor without a position detection sensor can be constantly stably activated.

In the aforementioned electric oil pump device according to this aspect, the controller preferably acquires the static friction torque based on a relationship between the motor current value of the electric oil pump detected at the time of activating the electric oil pump and the rotation speed of the electric oil pump, and performs control of activating the electric oil pump based on the acquired static friction torque.

According to this structure, the static friction torque at the time of activating the electric oil pump can be easily acquired based on the motor current value to be applied to the motor and the rotation speed of the electric oil pump, which are easily and directly acquired by the controller.

In the aforementioned electric oil pump device in which the controller corrects the starting voltage and forced commutation frequency of the motor based on the acquired static friction torque, the controller preferably corrects the starting voltage of the motor at the time of activating the electric oil pump by changing a set value of a duty ratio.

According to this structure, the starting voltage to be applied to the motor can be easily changed at the time of activating the electric oil pump. Furthermore, at the time of the activation, the set value of the duty ratio is changed to secure the starting voltage, and the forced commutation frequency corresponding to this starting voltage is used such that the electric oil pump can be stably activated, and thus even when the electric power of a battery is supplied to another portion of a vehicle, and the power-supply voltage of the battery is slightly varied (voltage shortage or the like occurs), the electric oil pump can be reliably activated.

### Brief Description of the Drawings

[Fig. 1] A block diagram showing the structure of an electric oil pump device according to a first embodiment of the present invention.
[Fig. 2] A diagram showing the characteristics of an electric oil pump according to the first embodiment of the present invention.
[Fig. 3] A diagram showing the contents of a table used for activation control of the electric oil pump according to the first embodiment of the present invention.
[Fig. 4] A diagram showing a processing flow in the activation control of the electric oil pump according to the first embodiment of the present invention.
[Fig. 5] A diagram schematically showing the concept of a correlation expression used for activation control of an electric oil pump according to a second embodiment of the present invention.

### Modes for Carrying Out the Invention

Embodiments of the present invention are hereinafter described on the basis of the drawings.

### [First Embodiment]

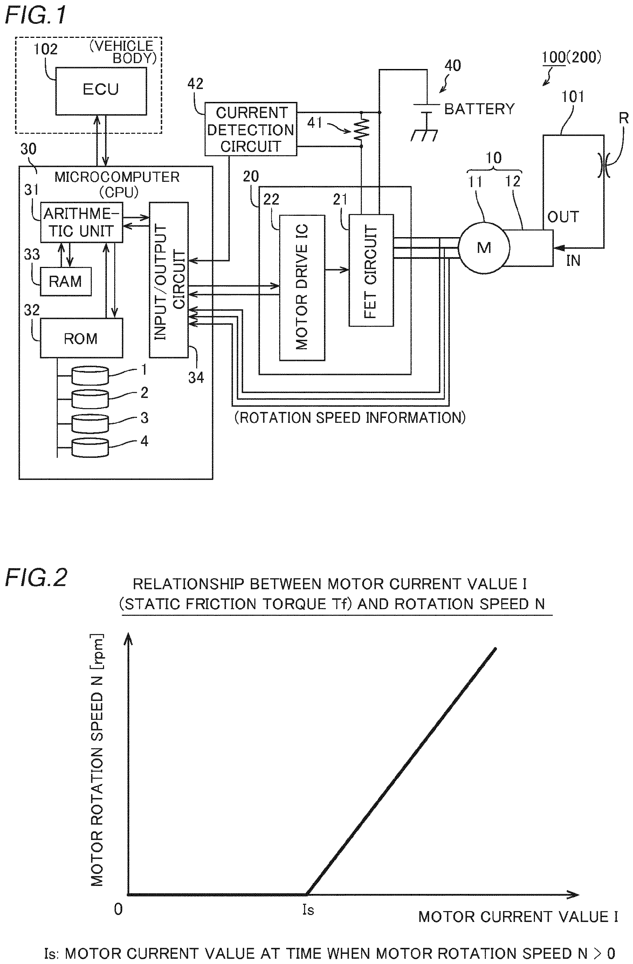

The structure of an electric oil pump device 100 according to a first embodiment of the present invention is now described with reference to Figs. 1 to 3.

The electric oil pump device 100 according to the first embodiment of the present invention is mounted on a vehicle (automobile). The electric oil pump device 100 includes an electric oil pump 10, a motor drive circuit 20 that drives the electric oil pump 10, and a microcomputer 30 (an example of a controller) that transmits a drive signal to the motor drive circuit 20. The motor drive circuit 20 and the microcomputer 30 may be mounted in a housing of the electric oil pump 10 or may be provided in a control box (not shown) separate from the electric oil pump 10.

The electric oil pump 10 includes a motor 11 and a pump 12. In the electric oil pump 10, the pump 12 is connected to a hydraulic circuit 101. The hydraulic circuit 101 has a predetermined flow path resistance R. When the pump 12 is driven, a necessary hydraulic pressure is supplied to the hydraulic circuit 101. Here, an internal gear pump, an external gear pump, a centrifugal pump, etc. are applied to the pump 12. The hydraulic circuit 101 includes a circuit that supplies an operating fluid of hydraulic pressure required for clutch engagement of an automatic transmission when an engine is stopped to idle while the vehicle is stopped. Also, the hydraulic circuit 101 includes a circuit that supplies cooling oil of necessary hydraulic pressure to a cooling jacket of an electric motor (not shown) of a hybrid vehicle, for example. Unlike a mechanical oil pump driven by the drive force of an engine, the electric oil pump 10 is frequently used as an oil pump driven by electric power supplied from a battery 40.

A sensorless three-phase brushless DC motor is used as the motor 11 in the electric oil pump 10. That is, the motor 11 does not include a position detection sensor such as a Hall element. Furthermore, the motor drive circuit 20 includes an FET circuit 21 including a semiconductor switch and a motor drive IC 22. A direct-current voltage of the battery 40 is applied to three wires (a U-phase drive coil, a V-phase drive coil, and a W-phase drive coil) of the motor 11 via the FET circuit 21. Based on a signal from the motor drive IC 22, the FET circuit 21 sequentially applies a voltage between the two wires (between the U phase and the V phase, between the U phase and the W phase, and between the V phase and the W phase) of the three wires of the motor 11 to rotationally drive the motor 11 by a unit rotation angle. At this time, the FET circuit 21 performs PWM control (duty-ratio control) of repeatedly switching between a state in which the voltage applied between the two wires is turned on for a predetermined time and a state in which the voltage between the two wires is turned off for a predetermined time according to the signal from the motor drive IC 22. Thus, the average voltage applied to the motor 11 is controlled so as to be a control command voltage.

The microcomputer 30 includes an arithmetic unit 31 (an example of a controller) that performs various types of arithmetic processing, a ROM 32 that stores in advance various programs executed by the arithmetic unit 31, etc., a RAM 33 from and in which the arithmetic unit 31 reads and writes data necessary during arithmetic processing, and an input/output circuit 34 that receives a unit angle rotation signal and a motor current signal and outputs, to the motor drive IC 22, a command voltage to drive the motor 11.

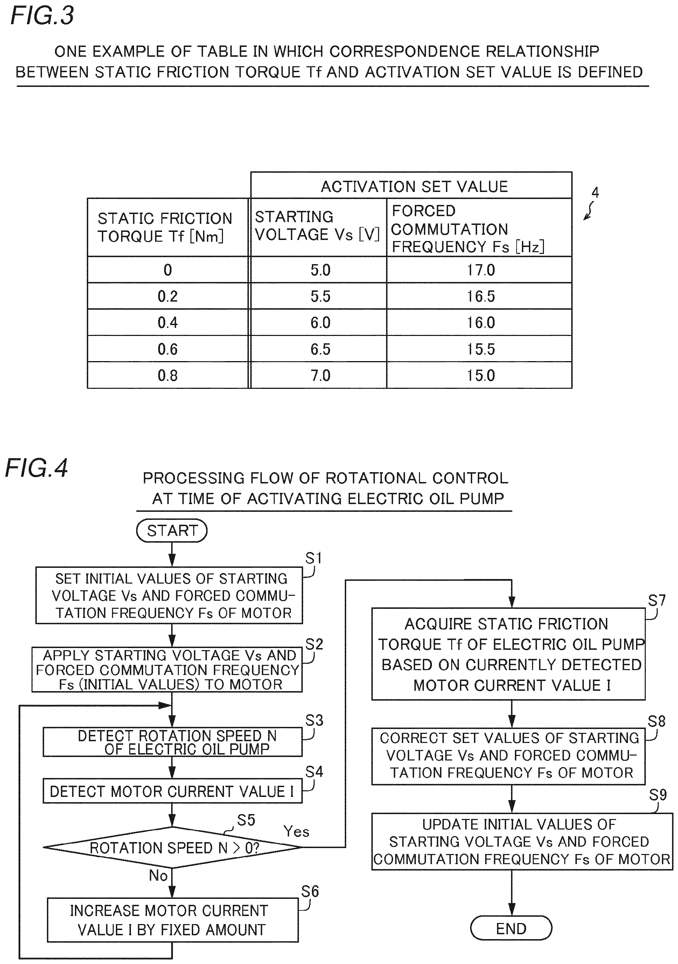

The ROM 32 stores a motor rotation speed calculation program 1, and a motor control program 2 to estimate an oil temperature based on a motor current value I (corresponding to a torque) and the rotation speed N of the motor 11 and to supply the oil of necessary hydraulic pressure from the pump 12 to the hydraulic circuit 101. The ROM 32 further stores a current control program 3 to calculate a difference between the motor current value I detected by a current detection circuit 42 and a target value, to calculate the command voltage to be applied to the motor 11 using proportional control, integral control, and differential control, and to output the same to the motor drive IC 22, and a table 4 (see Fig. 3) referred to at the time of activating the motor 11, as described below. The microcomputer 30 is connected to an ECU 102 on the vehicle body side such that mutual communication is possible. Therefore, the microcomputer 30 functions based on a control signal from the ECU 102.

The electric oil pump device 100 includes a shunt resistor 41 and the current detection circuit 42 in its control circuit in addition to the motor drive circuit 20 and the microcomputer 30. The shunt resistor 41 is connected to the FET circuit 21, and the current detection circuit 42 measures a voltage between both terminals of the shunt resistor 41, detects a current value to be supplied to the motor 11, and sends the motor current signal to the microcomputer 30.

### (Details of Activation Control of Electric Oil Pump)

In the motor 11 including a sensorless three-phase brushless DC motor, no induced voltage (counter-electromotive voltage) is generated in a state in which the motor 11 is stopped. Therefore, when the motor 11 is activated, it is necessary to input a rectangular wave signal (forced commutation signal) having a specific frequency (forced commutation frequency) under a predetermined starting voltage to the FET circuit 21. Thus, the motor 11 starts to rotate, and an induced voltage is generated in the drive coil. Then, a sensorless drive signal is generated from this induced voltage, and the signal input to the FET circuit 21 is switched from the forced commutation signal to the sensorless drive signal at the predetermined timing such that the rotational drive of the motor 11 after the activation is continued.

According to the first embodiment, the following control is performed at the time of activating the electric oil pump 10 based on a command from the arithmetic unit 31 of the microcomputer 30.

Specifically, based on the relationship between the motor current value I of the motor 11 detected at the time of activating the electric oil pump 10 and the rotation speed N of the electric oil pump 10, the static friction torque Tf of the pump 12 and the motor 11 of the electric oil pump 10 is acquired by the microcomputer 30 side. Based on the static friction torque Tf acquired by the microcomputer 30 side, the arithmetic unit 31 performs control of correction from originally set initial values (default values) of the starting voltage Vs and the forced commutation frequency Fs of the motor 11 at the time of activating the electric oil pump 10 to more optimum values.

Thus, in the electric oil pump device 100, the electric oil pump 10 is activated based on the static friction torque Tf acquired based on the relationship between the motor current value I of the motor 11 detected at the time of activating the electric oil pump 10 and the rotation speed N of the electric oil pump 10. The static friction torque Tf of the pump 12 and the motor 11 is a unique numerical value determined by the sum of a frictional force of meshing of gears (an inner rotor and an outer rotor of the internal gear type) of the pump 12 and a frictional force between a shaft and a bearing of the motor 11.

The motor current value I is grasped by the microcomputer 30 side based on the voltage between both terminals of the shunt resistor 41 detected by the current detection circuit 42. Furthermore, the rotation speed N is grasped by the microcomputer 30 side based on the number of poles of the motor 11 and the number of poles of the motor 11 and zero cross point (phase at the time when the induced voltage waveform becomes 1/2 of its amplitude) counts in the waveform of the induced voltage generated in each of the three wires (the U-phase drive coil, the V-phase drive coil, and the W-phase drive coil) when the motor 11 starts to rotate.

Therefore, as the activation control, first, energization of the motor 11 (the U-phase drive coil, the V-phase drive coil, and the W-phase drive coil) in the electric oil pump 10 is started under the conditions of the starting voltage Vs and the forced commutation frequency Fs set to some initial values. Then, control is performed to gradually increase the current value to be applied to the motor 11 in predetermined increments. Then, as shown in Fig. 2, based on a motor current value Is detected at the time when the motor 11 starts to rotate (the time when the rotation speed N > 0), the static friction torque Tf of the electric oil pump 10 (the pump 12 and the motor 11) is grasped. The relationship between the motor current value Is and the static friction torque Tf is a characteristic possessed by the electric oil pump 10, and this characteristic (correlation) is registered (stored) in advance on the microcomputer 30 side.

According to the first embodiment, the starting voltage Vs and the forced commutation frequency Fs that enable output of the static friction torque Tf when the motor 11 starts to rotate (the time when the rotation speed N > 0) are changed (corrected) from the aforementioned initial values to other optimum values. In this case, the set value of the duty ratio output from the motor drive IC 22 to the FET circuit 21 is changed such that the starting voltage Vs to be applied to the motor 11 is corrected. Thus, the starting voltage Vs and the forced commutation frequency Fs set to the optimum values according to the state of the electric oil pump 10 are applied to the motor 11, and thus the electric oil pump 10 can be constantly stably activated.

The ROM 32 (see Fig. 1) stores the table 4 as shown in Fig. 3. In the table 4, the static friction torque Tf of the pump 12 and the motor 11 in the electric oil pump 10 (see Fig. 1) and the starting voltage Vs and the forced commutation frequency Fs of the motor 11 are associated with each other. Therefore, the arithmetic unit 31 (see Fig. 1) activates the electric oil pump 10 by powering the motor 11 based on the table 4.

The correction of the starting voltage Vs and the forced commutation frequency Fs at the time of activating the electric oil pump 10 described above is repeatedly performed by the microcomputer 30 at the time of factory shipment of the electric oil pump 10 or at the time of activating the electric oil pump 10. That is, the static friction torque Tf at the time of factory shipment of the electric oil pump 10 may be different from the static friction torque Tf at the time of routinely using the electric oil pump 10 mounted on an automobile. Therefore, even when the electric oil pump 10 is activated for the first time at the time of factory shipment (at the time of product shipment inspection), the starting voltage Vs and the forced commutation frequency Fs are corrected. Furthermore, the starting voltage Vs and the forced commutation frequency Fs are corrected even during normal use. Therefore, the electric oil pump device 100 is constantly stably activated regardless of the product life of the electric oil pump 10.

A processing flow of the microcomputer 30 (arithmetic unit 31) at the time of activating the electric oil pump 10 in the electric oil pump device 100 is now described with reference to Figs. 1 to 4.

As shown in Fig. 4, in step S1, the initial value of the starting voltage Vs and the initial value of the forced commutation frequency Fs of the motor 11 (see Fig. 1) are set based on the command from the microcomputer 30 (see Fig. 1). In step S2, the starting voltage Vs and the forced commutation frequency Fs are applied to the motor 11 (see Fig. 1).

Thereafter, in step S3, the rotation speed N of the electric oil pump 10 (motor 11) is detected. The rotation speed N is acquired based on the number of poles of the motor 11 and the zero cross point counts in the waveform of the induced voltage generated in each of the three wires (the U-phase drive coil, the V-phase drive coil, and the W-phase drive coil) when the motor 11 starts to rotate. In step S4, the motor current value I of the motor 11 is detected. The motor current value I is acquired based on the voltage between both terminals of the shunt resistor 41 (see Fig. 1) detected by the current detection circuit 42.

Then, in step S5, the microcomputer 30 determines whether or not the rotation speed N of the motor 11 is greater than zero. When the microcomputer 30 determines in step S5 that the rotation speed N of the motor 11 is zero, the processing in step S3 and step S4 described above is repeated in a state in which the motor current value I is increased by a predetermined fixed amount in step S6. That is, the increase of the motor current value I is repeated until the motor 11 starts to rotate.

When determining in step S5 that the rotation speed N of the motor 11 is greater than zero, the microcomputer 30 acquires (calculates) the static friction torque Tf of the electric oil pump 10 in step S7. That is, the torque corresponding to the motor current value Is (see Fig. 2) at the moment when the rotation speed N of the motor 11 exceeds zero is acquired as the static friction torque Tf of the electric oil pump 10 by the microcomputer 30 side.

Thereafter, in step S8, based on the table 4 (see Fig. 3), the current starting voltage Vs and the current forced commutation frequency Fs set as the initial values (default values) are changed to a starting voltage Vs and a forced commutation frequency Fs corresponding to the acquired (calculated) static friction torque Tf. In step S9, the initial values of the starting voltage Vs and the forced commutation frequency Fs are updated to the starting voltage Vs and the forced commutation frequency Fs changed in step S8. The updated starting voltage Vs and the updated forced commutation frequency Fs are used as the initial values (default values) of the starting voltage Vs and the forced commutation frequency Fs at the time of activating the motor 11 next time.

The processing from step S1 to step S9 is performed such that the starting voltage Vs and the forced commutation frequency Fs corresponding to the static friction torque Tf of the pump 12 and the motor 11 at the time of activating the electric oil pump 10 are set. Therefore, these starting voltage Vs and forced commutation frequency Fs are applied to the motor 11 such that the electric oil pump 10 is activated smoothly. The electric oil pump device 100 according to the first embodiment is configured as described above.

### (Advantageous Effects of First Embodiment)

According to the first embodiment, the following advantageous effects are achieved.

According to the first embodiment, as described above, the electric oil pump device 100 includes the microcomputer 30 that acquires the static friction torque Tf of the pump 12 and the motor 11 of the electric oil pump 10 based on the relationship between the motor current value I of the electric oil pump 10 detected at the time of activating the electric oil pump 10 and the rotation speed N of the electric oil pump 10, and performs control of activating the electric oil pump 10 based on the acquired static friction torque Tf. Accordingly, even when the static friction torque Tf of the pump 12 and the motor 11 of the electric oil pump 10 has an individual difference for each electric oil pump 10, the activation control of the electric oil pump 10 can be performed based on the static friction torque Tf of the pump 12 and the motor 11 acquired at the time of activating the electric oil pump 10. Consequently, the electric oil pump 10 using the motor 11 without a position detection sensor can be stably activated regardless of the individual difference of the electric oil pump 10. Not only when the static friction torque Tf of the pump 12 and the motor 11 has an individual difference at the time of manufacture (at the time of factory shipment) but also when the static friction torque Tf of the pump 12 and the motor 11 changes with time after use of the electric oil pump 10, the electric oil pump 10 can be activated in a state in which a control value at the time of the activation is reset following the change of the static friction torque Tf. Thus, the electric oil pump 10 can be stably activated for a long period of time.

Furthermore, the electric oil pump device 100 includes the microcomputer 30 described above such that the electric oil pump 10 can be stably activated even when the oil viscosity varies according to the oil temperature. Therefore, the range of the oil temperature at which the electric oil pump 10 can be used can be expanded. In addition, the electric oil pump 10 can be stably activated even when the design tolerance at the time of designing each of the pump 12 and the motor 11 is loosened (the design accuracy is reduced), and thus the design accuracy and the manufacturing accuracy of the electric oil pump 10 can be easily managed.

According to the first embodiment, the microcomputer 30 acquires the static friction torque Tf of the pump 12 and the motor 11 of the electric oil pump 10 based on the relationship between the motor current value I (motor current value Is) of the electric oil pump 10 detected at the time of activating the electric oil pump 10 and the rotation speed N of the electric oil pump 10, and corrects the starting voltage Vs and the forced commutation frequency Fs of the motor 11 at the time of activating the electric oil pump 10 based on the acquired static friction torque Tf. Accordingly, based on the static friction torque Tf of the pump 12 and the motor 11 acquired at the time of activating the electric oil pump 10, the starting voltage Vs to be applied to the motor 11 and the set forced commutation frequency Fs can be corrected at the time of activating the electric oil pump 10. Therefore, the electric oil pump 10 using the motor 11 without a position detection sensor can be reliably activated by the starting voltage Vs and the forced commutation frequency Fs corrected based on the acquired static friction torque Tf.

According to the first embodiment, the microcomputer 30 acquires the static friction torque Tf of the pump 12 and the motor 11 of the electric oil pump 10 based on the torque corresponding to the motor current value Is of the electric oil pump 10 when the electric oil pump 10 starts to rotate. Accordingly, the static friction torque Tf of the pump 12 and the motor 11 at the time of activating the electric oil pump 10 can be reliably acquired.

According to the first embodiment, the electric oil pump device 100 includes the table 4 in which the static friction torque Tf of the pump 12 and the motor 11 in the electric oil pump 10 and the starting voltage Vs and the forced commutation frequency Fs of the motor 11 are associated with each other. Furthermore, the microcomputer 30 activates the electric oil pump 10 based on the table 4. Accordingly, the activation control of the electric oil pump 10 can be easily performed with reference to the table 4 in which the acquired static friction torque Tf and the starting voltage Vs and the forced commutation frequency Fs of the motor 11 are associated with each other at the time of activating the electric oil pump 10.

According to the first embodiment, the microcomputer 30 repeatedly corrects the starting voltage Vs and the forced commutation frequency Fs of the motor 11 at the time of factory shipment of the electric oil pump 10 or at the time of activating the electric oil pump 10 when the electric oil pump 10 is routinely used. Accordingly, when the electric oil pump 10 is activated for the first time after shipment and every time the activation control of the electric oil pump 10 is performed during normal use, the starting voltage Vs and the forced commutation frequency Fs of the motor 11 are corrected, and thus the electric oil pump 10 using the motor 11 without a position detection sensor can be constantly stably activated.

According to the first embodiment, the microcomputer 30 acquires the static friction torque Tf based on the relationship between the motor current value I of the electric oil pump 10 detected at the time of activating the electric oil pump 10 and the rotation speed N of the electric oil pump 10 and performs control of activating the electric oil pump 10 based on the acquired static friction torque Tf. Accordingly, the static friction torque Tf at the time of activating the electric oil pump 10 can be easily acquired based on the motor current value I to be applied to the motor 11 and the rotation speed N of the electric oil pump 10, which are easily and directly acquired by the microcomputer 30.

According to the first embodiment, the microcomputer 30 corrects the starting voltage Vs of the motor 11 at the time of activating the electric oil pump 10 by changing the set value of the duty ratio output from the motor drive IC 22 to the FET circuit 21. Accordingly, the starting voltage Vs to be applied to the motor 11 can be easily changed using the FET circuit 21 at the time of activating the electric oil pump 10. Furthermore, at the time of the activation, the set value of the duty ratio is changed to secure the starting voltage Vs, and the forced commutation frequency Fs corresponding to this starting voltage Vs is used such that the electric oil pump 10 can be stably activated, and thus even when the electric power of the battery 40 is supplied to another portion of the vehicle, and the power-supply voltage of the battery 40 is slightly varied (voltage shortage or the like occurs), the electric oil pump 10 can be reliably activated.

### [Second Embodiment]

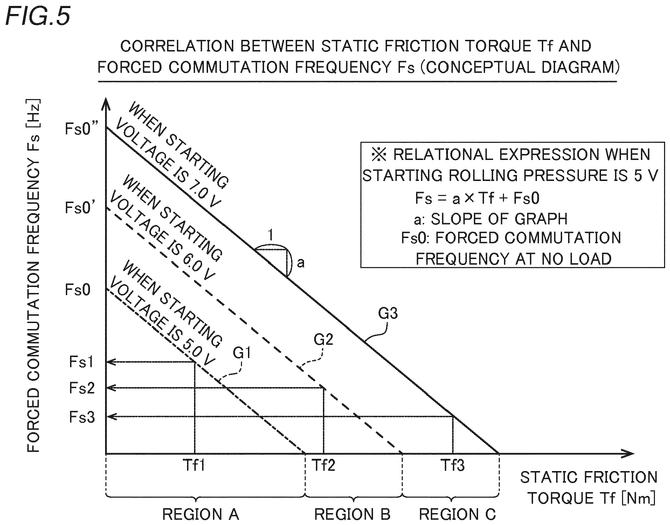

A second embodiment is now described with reference to Figs. 1 and 3 to 5. In this second embodiment, an example in which an electric oil pump 10 is activated based on a correlation expression (see Fig. 5) in which the correlation between the starting voltage Vs and the forced commutation frequency Fs of a motor 11 is defined instead of referring to a table 4 (see Fig. 3) is described. In the figures, the same structures as those of the aforementioned first embodiment are denoted by the same reference numerals.

In an electric oil pump device 200 (see Fig. 1) according to the second embodiment, an arithmetic unit 31 (see Fig. 1) determines the correlation between the starting voltage Vs and the forced commutation frequency Fs with respect to the static friction torque Tf acquired in previous step S7 based on the correlation expression shown in Fig. 5 in the processing in step S8 in the flow shown in Fig. 4.

As shown in Fig. 5, when the magnitude of the static friction torque Tf (horizontal axis) at the start of rotation of the motor 11 (at the time when the rotation speed N > 0) is acquired as "Tf1" within the range of a region A, for example, the magnitude of the forced commutation frequency Fs (horizontal axis) is calculated as "Fs1" using a correlation expression G1 (a graph of a one-dot chain line) corresponding to the nearest starting voltage Vs (= 5.0 V). Here, the correlation expression G1 containing the forced commutation frequency Fs1 = the slope a of the graph × the static friction torque Tf1 + Fs0 (the forced commutation frequency at no load of the motor 11) is established.

Similarly, when the static friction torque Tf at the moment when the rotation speed N > 0 is acquired as "Tf2" within a region B (> the region A), the forced commutation frequency Fs is calculated as "Fs2" using a correlation expression G2 (a graph of a broken line) corresponding to the nearest starting voltage Vs (= 6.0 V). Furthermore when the static friction torque Tf is acquired as "Tf3" within a region C (> the region B), the forced commutation frequency Fs is calculated as "Fs3" using a correlation expression G3 (a graph of a solid line) corresponding to the nearest starting voltage Vs (= 7.0 V). Here, Fs1, Fs2, and Fs3 have a relationship of Fs1 > Fs2 > Fs3. That is, one of the correlation expressions G1 to G3 corresponding to the smaller starting voltage Vs is selected according to the range of the magnitude of the acquired static friction torque Tf (the region A < the region B < the region C), and the forced commutation frequency Fs (Fs1, Fs2, or Fs3) is calculated based on the selected correlation expression. Thus, the optimum combination of the starting voltage Vs and the forced commutation frequency Fs according to the acquired static friction torque Tf is selected.

According to the second embodiment, a ROM 32 (see Fig. 1) of a microcomputer 30 stores the correlation expressions G1 to G3 shown in Fig. 5 and a processing routine (arithmetic program) that defines which correlation expression (one of G1 to G3) is to be applied according to the acquired static friction torque Tf. The remaining structures of the second embodiment are similar to those of the aforementioned first embodiment.

### (Advantageous Effects of Second Embodiment)

According to the second embodiment, as described above, the microcomputer 30 activates the electric oil pump 10 based on one of the correlation expressions G1 to G3 in which the correlation between the static friction torque Tf of a pump 12 and the motor 11 in the electric oil pump 10 and the starting voltage Vs and the forced commutation frequency Fs of the motor 11 is defined. Accordingly, activation control of the electric oil pump 10 can be easily performed based on one of the correlation expressions G1 to G3 in which the correlation between the acquired static friction torque Tf and the starting voltage Vs and the forced commutation frequency Fs of the motor 11 is defined at the time of activating the electric oil pump 10. The remaining advantageous effects of the second embodiment are similar to those of the aforementioned first embodiment.

### [Modified Examples]

The embodiments disclosed this time must be considered as illustrative in all points and not restrictive. The scope of the present invention is not shown by the above description of the embodiments but by the scope of claims for patent, and all modifications (modified examples) within the meaning and scope equivalent to the scope of claims for patent are further included.

For example, while the static friction torque Tf of the pump 12 and the motor 11 of the electric oil pump 10 is acquired based on the relationship between the motor current value I (motor current value Is) of the electric oil pump 10 detected at the time of activating the electric oil pump 10 and the rotation speed N of the electric oil pump 10 in each of the aforementioned first and second embodiments, the present invention is not restricted to this. For example, the static friction torque Tf of the electric oil pump 10 may be acquired based on the relationship between a torque directly detected by an acceleration sensor or the like attached to the shaft of the motor 11 at the time of activating the electric oil pump 10 and the rotation speed N of the motor 11, or the static friction torque Tf of the electric oil pump 10 may be acquired based on the relationship between the hydraulic pressure (hydraulic pressure information) and the oil discharge amount (oil discharge amount information) discharged from the pump 12 at the time of activating the electric oil pump 10. Furthermore, the microcomputer 30 may grasp all of the torque, the motor current value I, and the hydraulic pressure at the time of activating the electric oil pump 10 and all of the rotation speed N and the oil discharge amount of the electric oil pump 10, and may acquire the static friction torque Tf by executing a predetermined calculation based on the interrelationship among these detected values.

While the microcomputer 30 acquires the static friction torque Tf at time of activating the electric oil pump 10, and performs control processing for correcting the starting voltage Vs and the forced commutation frequency Fs of the motor 11 at the time of activating the electric oil pump 10 based on the acquired static friction torque Tf in each of the aforementioned first and second embodiments, the present invention is not restricted to this. That is, the ECU 102 on the vehicle body side may perform the function of the microcomputer 30. In this case, the ECU 102 is an example of a "controller" in the claims.

While the example in which the present invention is applied to the activation control of the electric oil pump 10 mounted on an automobile has been shown in each of the aforementioned first and second embodiments, the present invention is not restricted to this. For example, the present invention may be applied to activation control of an electric oil pump mounted on an internal combustion engine for facility equipment.

### Description of Reference Numerals

4: table
10: electric oil pump
11: motor
12: pump
20: motor drive circuit
21: FET circuit
22: motor drive IC
30: microcomputer (controller)
31: arithmetic unit (controller)
32: ROM
40: battery
41: shunt resistor
42: current detection circuit
100, 200: electric oil pump device
101: hydraulic circuit
102: ECU (controller)
Fs: forced commutation frequency
G1 to G3: correlation expression
I, Is: motor current value
Tf: static friction torque
N: rotation speed
Vs: starting voltage

## Claims

1. An electric oil pump device comprising:
an electric oil pump including a motor without a position detection sensor and driven by the motor; and
a controller that acquires a static friction torque of a pump and the motor of the electric oil pump based on a relationship between at least one of a torque, a motor current value, or a hydraulic pressure of the electric oil pump detected at a time of activating the electric oil pump and at least one of a rotation speed or an oil discharge amount of the electric oil pump, and performs control of activating the electric oil pump based on the acquired static friction torque.

2. The electric oil pump device according to claim 1, wherein the controller acquires the static friction torque of the pump and the motor of the electric oil pump based on the relationship between at least one of the torque, the motor current value, or the hydraulic pressure of the electric oil pump detected at the time of activating the electric oil pump and at least one of the rotation speed or the oil discharge amount of the electric oil pump, and corrects a starting voltage and a forced commutation frequency of the motor at the time of activating the electric oil pump based on the acquired static friction torque.

3. The electric oil pump device according to claim 1 or 2, wherein the controller acquires the static friction torque of the pump and the motor of the electric oil pump based on a torque of the electric oil pump when the electric oil pump starts to rotate.

4. The electric oil pump device according to any one of claims 1 to 3, further comprising a table in which the static friction torque of the pump and the motor in the electric oil pump and a starting voltage and a forced commutation frequency of the motor are associated with each other, wherein
the controller activates the electric oil pump based on the table.

5. The electric oil pump device according to any one of claims 1 to 3, wherein the controller activates the electric oil pump based on a correlation expression in which a correlation between the static friction torque of the pump and the motor in the electric oil pump and a starting voltage and a forced commutation frequency of the motor is defined.

6. The electric oil pump device according to claim 2, wherein the controller repeatedly corrects the starting voltage and the forced commutation frequency of the motor at a time of factory shipment of the electric oil pump or at the time of activating the electric oil pump.

7. The electric oil pump device according to any one of claims 1 to 6, wherein the controller acquires the static friction torque based on a relationship between the motor current value of the electric oil pump detected at the time of activating the electric oil pump and the rotation speed of the electric oil pump, and performs control of activating the electric oil pump based on the acquired static friction torque.

8. The electric oil pump device according to claim 2, wherein the controller corrects the starting voltage of the motor at the time of activating the electric oil pump by changing a set value of a duty ratio.
